# EUROPEAN PATENT APPLICATION

(11) **EP 4 807 660 A1**
(43) Date of publication of application: **16.09.2026**
(21) Application number: 24888736.6
(22) Date of filing: 06.11.2024
(51) Int. Cl.: G06Q 50/26, G06T 7/00

(54) **REGISTRATION SYSTEM**

(30) Priority: 08.11.2023 JP 2023191025; 21.10.2024 JP 2024185449
(71) Applicant: Kimura, Takanori, Takamatsu-shi, Kagawa 761-8084 (JP); Kimura, Kazuki, Takamatsu-shi, Kagawa 761-0104 (JP)
(72) Inventor: KIMURA, Takanori, Takamatsu-shi, Kagawa 761-8084 (JP)
(74) Representative: Plougmann Vingtoft a/s
(86) International application number: PCT/JP2024/039451
(87) International publication number: WO 2025/100443

(57) **Abstract**

[Object] Provided is a registration system that can manage registration of rights and prevent counterfeiting of rights while maintaining an existing system that uses written certificates.

[Solution to Problem] A registration system 1 that manages rights in an article certified by a written document includes a storage unit 12 configured to store information about the article and an original certificate image, which is an image of an original written document certifying the rights to the article, in association with each other, and a verification unit 15 configured to compare a verification image of a written document captured as an image with the original certificate image stored in the storage unit 12. The verification unit includes an image verification function 15b to compare a certification information image included in the original certificate image with the verification image and verify whether the verification image includes an image that matches the certification information image in the original certificate image, and a determination function 15c to determine whether the written document to be verified is an original of the written document certifying the rights to the article, based on the result of comparison and verification by the image verification function 15b.

## Description

### Technical Field

The present invention relates to a registration system.

### Background Art

Real estate is managed through a real estate registration system that maintains information about the owner and the subject property. Because the registry is publicly accessible, the property and the rights can be clearly ascertained. For example, even third parties may obtain information such as the location and area of land and buildings by inspecting the registry. The registry also indicates who the owner of the property is and how ownership was transferred. In the case of movable property such as motor vehicles, a vehicle registration number is registered at the District Transport Bureau, and the specifications and rights in the registered vehicle can thereby be ascertained. Construction machinery, in particular, vehicle-type machinery bearing a license plate is registered at the District Transport Bureau, like other vehicles, and is issued a vehicle inspection certificate that clearly shows the details of the machinery. By confirming the registration at the District Transport Bureau, the rights such as ownership can be ascertained.

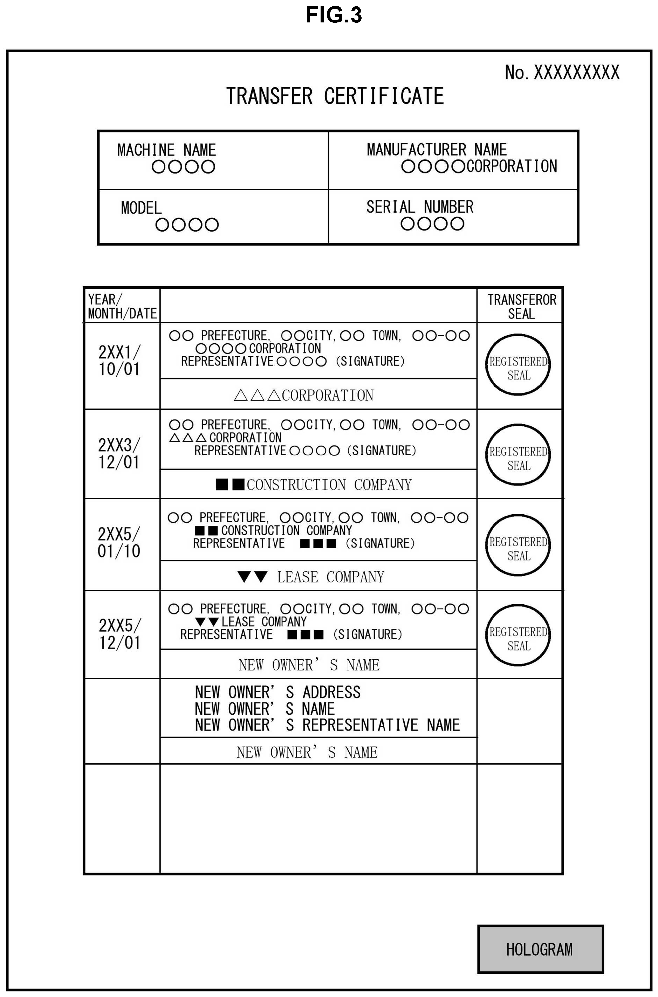

On the other hand, for construction machinery that has an individual identification number but is not issued a vehicle inspection certificate by an official agency, a written transfer certificate issued by the Japan Construction Equipment Manufacturers Association is used to transfer ownership. Specifically, when a manufacturer of construction machinery produces a construction machine and sells it to a purchaser, information such as the manufacturer's name and address and the model number of the subject construction machine, and information such as the purchaser's name and address are listed to prove that the subject construction machine has been transferred from the manufacturer to the purchaser, that is, that the ownership of the construction machine has been transferred from the manufacturer to the purchaser. Each time the ownership changes, information of the new owner (i.e., transferor) is added to the transfer certificate (see FIG. 3). Since this transfer certificate cannot be reissued, information such as the model number of the construction machine, as well as who the current owner is and how the machine has been transferred to the present can be ascertained by checking the transfer certificate.

Due to its high price, construction machinery is recognized as valuable movable collateral and is often used by financial institutions and finance companies as security in connection with transfers of construction machinery and lease transactions. For this reason, the transfer certificate is very important as evidence of ownership and transfer of the construction machinery.

Despite the great importance of the transfer certificate for construction machinery, there is no defined method for its safekeeping. The transfer certificate may be kept by the owner, by the manufacturer, or by the leasing company. Currently, there is no method to confirm the existence of official transfer certificates, and fraud by forging transfer certificates is rampant.

As a system for registering information on construction machinery, Patent Literature 1 discloses a system and method for providing heavy machinery net information that promotes the emergency dispatch of heavy machinery at the time of a disaster and the utilization of idle heavy machinery during normal times. Patent Literature 1 discloses a database associated with providers and users of heavy machinery and a system configuration that can provide search results for information about heavy machinery. However, Patent Literature 1 merely provides the technology for registering information on heavy machinery owned by heavy machinery manufacturers, heavy machinery leasing companies, and the like, and does not describe management of transfer certificates of the registered heavy machinery, that is, the heavy machinery owned by heavy machinery manufacturers, heavy machinery leasing companies, and the like.

On the other hand, Patent Literature 2 discloses a service that performs management of various information, including registration of various information and acceptance of changes (management service), a service that outputs various documents, ledgers, histories, and the like (output service), and a service that enables users to search and inspect various information (inspection service) (see paragraph 0020 of the specification and FIG. 1 in Patent Literature 2).

Patent Literature 2 also discloses the registration and changes of various information, the registration of maintenance and inspection history (record information) of construction equipment, and the issuance of "digital transfer certificate", which is a certificate regarding the transfer of construction equipment (paragraph 0023 of the specification in Patent Literature 2).

Furthermore, the "digital transfer certificate" is issued by a service provider and then the transferor and transferee of the construction equipment are successively entered (data entry) in the same manner as endorsement of a promissory note, so that the owner of the construction equipment can be accurately identified. This service can prevent or deter fraudulent sales and purchases of construction equipment (paragraph 0023 of the specification in Patent Literature 2).

### Citation List

### Patent Literature

Patent Literature 1: Japanese Laid-Open Patent Publication No. 2005-338989
Patent Literature 2: Japanese Laid-Open Patent Publication No. 2020-30548

### Disclosure of Invention

### Technical Problem

Although the technology of Patent Literature 2 could prevent or deter fraudulent sales and purchases of construction equipment, the technology of Patent Literature 2 would not be feasible without the establishment of a new digital registration system. In other words, it is not possible to prevent fraudulent sales and purchases of construction equipment while maintaining the existing system of registration management based on written transfer certificates.

Fraudulent issues arising from forged documents are not limited to transfer certificates of construction equipment but also extend to written documents such as warranty certificates and appraisal certificates. However, there is currently no management system that can prevent such fraud as that occurring in transfer certificates for construction equipment, and there is a need for such a system.

In view of the above circumstances, an object of the present invention is to provide a registration system that can manage registration of rights and prevent counterfeiting of rights while maintaining the existing system based on written certificates.

### Solution to Problem

According to a first aspect of the present invention, a registration system that manages rights in an article certified by a written document includes a storage unit configured to store information about the article and an original certificate image, which is an image of an original written document certifying the rights to the article, in association with each other, and a verification unit configured to compare a verification image of a written document captured as an image with the original certificate image stored in the storage unit. The verification unit includes an image verification function to compare a certification information image included in the original certificate image with the verification image and verify whether the verification image includes an image that matches the certification information image in the original certificate image, and a determination function to determine whether the written document to be verified is an original of the written document certifying the rights to the article, based on a result of comparison and verification by the image verification function.

According to a second aspect of the present invention, in the registration system according to the first aspect, the certification information image is a letter of a signature by an owner and/or a transferee of the rights to the article, and/or an impression of a seal of an owner and/or a transferee of the rights to the article.

According to a third aspect of the present invention, in the registration system according to the first or second aspect, the article is construction machinery and the written document is a transfer certificate of the construction machinery.

According to a fourth aspect of the present invention, the registration system according to the first aspect further includes a viewing unit configured to provide viewing of the information about the article that is stored in the storage unit. The viewing unit includes an input function to input information to be viewed, an information request function to request information from the storage unit for the information input by the input function, and a screen display function having a function to display an input screen for inputting information to be viewed from the input function and/or a function to display information supplied based on a request from the information request function.

According to a fifth aspect of the present invention, in the registration system according to the fourth aspect, the storage unit includes a first storage unit configured to store basic information in which the information about the article and the original certificate image are associated with each other, and a second storage unit connected to the first storage unit. The second storage unit stores all and/or part of the basic information in the first storage unit. The storage unit has a function to provide information stored in the second storage unit in response to a request from the information request function of the viewing unit.

According to a sixth aspect of the present invention, in the registration system according to the fifth aspect, the first storage unit is a node of a private blockchain, and the basic information is registered in the blockchain.

According to a seventh aspect of the present invention, in the registration system according to the fourth aspect, the viewing unit has a function to hide a part of the original certificate image when information to be viewed is the original certificate image.

According to an eighth aspect of the present invention, in the registration system according to the first aspect, the information about the article includes information about a location of the article.

According to a ninth aspect of the present invention, in the registration system according to the first aspect, the image verification function of the verification unit compares and verifies the verification certificate image with the certification information image in the original certificate image using artificial intelligence (AI).

According to a tenth aspect of the present invention, the registration system according to the first aspect further includes an information change unit. The information change unit has a function to create information about a new article and store the created information in the storage unit and a function to create a digital transfer certificate and/or a digital cancellation certificate associated with the information about the new article. The digital transfer certificate includes information about rights to the new article and an owner of the rights. The digital transfer certificate stores history of the owner of the rights to the new article.

According to an eleventh aspect of the present invention, the registration system according to the first aspect further includes an information change unit. The information change unit has a function to cancel registration of an article registered and store information in the storage unit and a function to create a digital cancellation certificate associated with information about the new article. The digital cancellation certificate certifies cancellation of registration of the article having the registration canceled.

### Advantageous Effects of Invention

According to the first aspect of the present invention, the verification image of a written document captured as an image is compared with the original certificate image stored in the storage unit, and the image verification function compares the two images and verifies the matching between them to determine whether the written document is original. Thus, forgery of the written document can be prevented. Since forgery is prevented while using the existing method based on written documents, the existence of rights can be clarified and forgery can be prevented even for articles currently in circulation.

According to the second aspect of the present invention, the effect of preventing forgery of written documents can be increased.

According to the third aspect of the present invention, forgery of the transfer certificate for construction machinery can be prevented and ownership of construction machinery can be properly managed.

According to the fourth aspect of the present invention, information such as ownership of the article registered in the system can be easily confirmed.

According to the fifth aspect of the present invention, the information viewed through the viewing unit is information stored in the second storage unit. Since the viewing unit does not directly connect to the first storage unit, leakage of or tampering with the basic information can be prevented.

According to the sixth aspect of the present invention, the security of the basic information stored in the first storage unit can be increased.

According to the seventh aspect of the present invention, forgery based on the result of viewing the original certificate image can be prevented.

According to the eighth aspect of the present invention, the location and value of the article registered in the system can be ascertained.

According to the ninth aspect of the present invention, forgery of a written document can be identified effectively and accurately.

According to the tenth aspect of the present invention, the management of rights to the newly registered article is facilitated.

According to the eleventh aspect of the present invention, the management of the article having registration canceled is facilitated.

### Brief Description of Drawings

FIG. 1 is a schematic illustration of a registration system 1 of an embodiment of the present invention;
FIG. 2 is a schematic block diagram of an information processing device 10 of the registration system 1 of the present embodiment;
FIG. 3 is a diagram illustrating an exemplary transfer certificate of construction machinery;
FIG. 4 is a diagram illustrating exemplary machine information data;
FIG. 5(A) is a diagram of an exemplary basic information list, and FIG. 5(B) is a diagram of an exemplary viewing result;
FIG. 6 is a diagram illustrating an example of a partially masked transfer certificate of construction machinery;

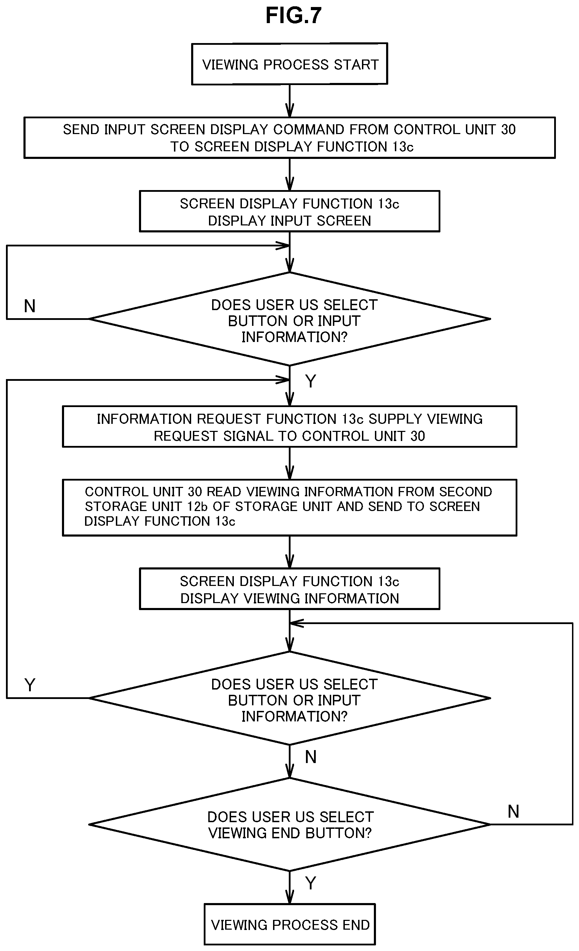

FIG. 7 is an exemplary flowchart of a viewing process; and

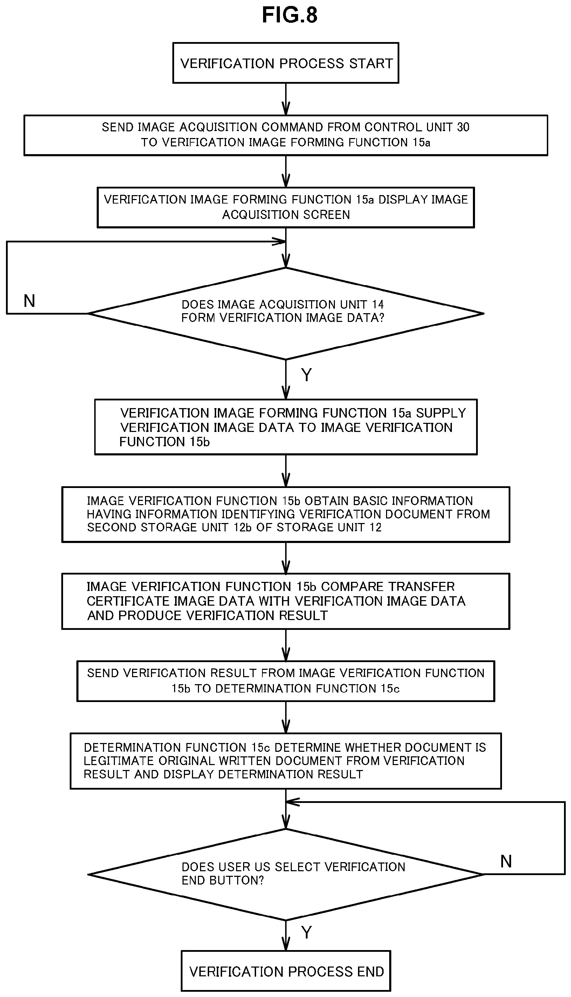

FIG. 8 is an exemplary a flowchart of a verification process.

### Description of Embodiments

A registration system of an embodiment of the present invention is a system for registering and managing rights such as ownership of construction machinery and the like based on registration forms and certificates issued in paper form, and can prevent counterfeiting of ownership and the like.

Although the registration system of the present embodiment is suitable for managing registration of ownership of construction machinery and preventing counterfeiting, it can also be used to prevent counterfeiting of rights and the like in any movable property that is issued registration forms, certificates, or appraisal certificates in paper form containing information identifying individuals, such as serial numbers of articles. For example, in addition to construction machinery, the present registration system can be used to register and manage rights and the like relating to real estate such as land and buildings; assets subject to property tax, such as depreciable business assets including machinery equipment and vehicles; and automobiles, luxury watches, jewelry, and the like.

In the following, the case of registering and managing ownership of construction machinery is described as a representative example.

### <Transfer Certificate>

Prior to a description of the details of the registration system 1 of the present embodiment, a transfer certificate for construction machinery used for verification by the registration system 1 of the present embodiment will be described briefly.

The transfer certificate is a written document issued by the Japan Construction Equipment Manufacturers Association that cannot be reissued and bears a hologram to prevent counterfeiting. The transfer certificate contains information identifying a construction machine, such as the model number of the construction machine, the name and address of the construction machinery manufacturer that produced the construction machine, and the seal impression of the construction machinery manufacturer. This transfer certificate is signed (or stamped) with the name and address of the purchaser (transferor) who purchased the construction machine from the construction machinery manufacturer, and the seal authenticating the transferor, such as the transferor's registered personal seal (or registered seal (representative seal) if the transferor is a corporation), is stamped in a line below the signature of the construction machinery manufacturer (see FIG. 3). In other words, the transferor listed at the bottom of the transfer certificate indicates the current owner. If the transferor does not have a personal registered seal, the transferor shall also sign and indicate the transferor's name and address. Then, when the construction machine is transferred, a new transferor, that is, a new owner, is added to the bottom of the transfer certificate, so that the current owner can be identified by the transfer certificate, and the past owners and the ownership transfers can be tracked.

The registration system 1 of the present embodiment for registering and managing ownership of construction machinery can prevent counterfeiting of ownership using the written transfer certificate described above. In other words, the registration system 1 of the present embodiment can effectively prevent counterfeiting of ownership by forgery of transfer certificates while using the current management system based on written documents serving as evidence of changes in ownership by transfer and of the current owner. In addition, the registration system 1 is configured to effectively utilize the registration information of construction machinery.

In the following description, "transfer certificate image data" refers to image data of the written transfer certificate described above. For example, image data formed by scanning a transfer certificate with a scanner or the like or data obtained by photographing a transfer certificate with a digital camera or the like and stored as image data is "transfer certificate image data" (see FIG. 3).

If assets subject to property taxation are subject to be managed by the registration system 1 of the present embodiment, "fixed asset valuation certificate" is equivalent to the "transfer certificate" of construction machinery described above. If automobiles are subject to be managed by the registration system 1 of the present embodiment, "vehicle inspection certificate" is equivalent to the "transfer certificate" of construction machinery described above. If valuables such as luxury watches and jewelry are subject to be managed by the registration system 1 of the present embodiment, "appraisal certificate", "certificate of authenticity", or "warranty certificate" is equivalent to the "transfer certificate" of construction machinery described above.

If assets subject to property taxation are subject to be managed by the registration system 1 of the present embodiment, various information about the assets subject to property taxation (e.g., information on current and past owners, information identifying the assets, asset values, etc.) is equivalent to "machine information" included in basic information described below. If automobiles are subject to be managed by the registration system 1 of the present embodiment, various information described in "vehicle inspection certificate" and other information related to the automobiles (valuation information, transfer history, repair history, accident history, etc.) are equivalent to "machine information" included in basic information described below. If valuables such as luxury watches and jewelry are subject to be managed by the registration system 1 of the present embodiment, various information described in "appraisal certificate", "certificate of authenticity", or "warranty certificate" and other information related to the valuables (valuation information, transfer history, repair history, self history such as theft) are equivalent to "machine information" included in basic information described later.

If the image data of the above documents, that is, the image data of the original certificate image, is a non-fungible token (NFT), the reliability of the subject managed by the registration system 1 of the present embodiment can be enhanced.

### <Registration System 1 of the Present Embodiment>

First, an overall configuration of the registration system 1 of the present embodiment will be described.

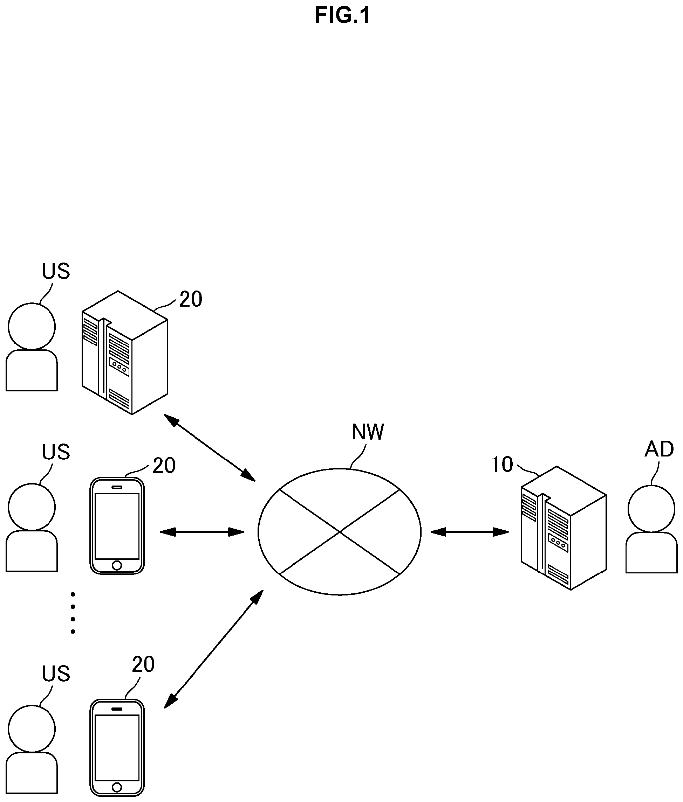

As illustrated in FIG. 1, the registration system 1 of the present embodiment includes an information processing device 10 and a plurality of terminal devices 20 capable of data communication with the information processing device 10.

The information processing device 10 is a computer, such as a server, having functions described below. An example of the information processing device 10 may be a computer, such as a server belonging to a cloud computing system or other computing systems.

The terminal devices 20 are capable of data communication with the information processing device 10 via a network NW or the like. The terminal devices 20 each have, for example, a function to request information from the information processing device 10 or display information supplied by the information processing device 10. Examples of the terminal device 20 may include a general personal computer and a portable terminal such as a tablet terminal and a smart phone.

### <Functions of Information Processing Device 10>

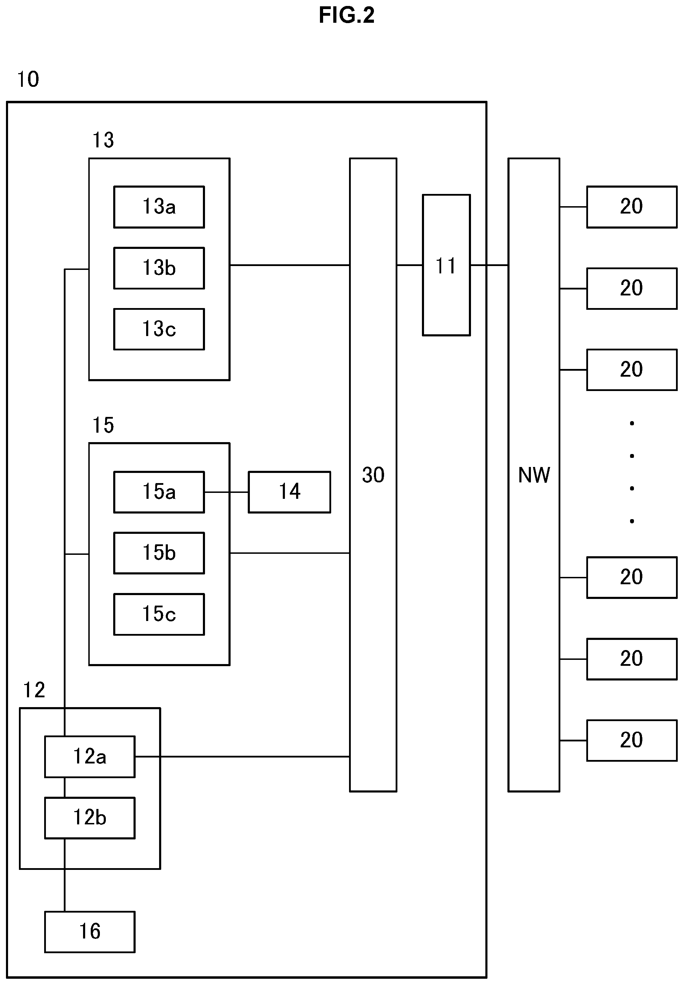

As illustrated in FIG. 2, the information processing device 10 includes a communication unit 11 configured to perform data communication with the terminal devices 20 via the network NW or the like, a storage unit 12 configured to store various data, and a viewing unit 13 configured to provide viewing of information stored in the storage unit 12. The information processing device 10 also includes a verification unit 15 configured to verify a document such as a transfer certificate. The information processing device 10 includes a control unit 30 configured to control the operation of each unit of the information processing device 10 so that the registration system 1 of the present embodiment functions as described below.

### <Communication Unit 11>

The information processing device 10 includes the communication unit 11 having a function to send and receive data between the information processing device 10 and the terminal devices 20, that is, a function of data communication between the information processing device 10 and the terminal devices 20. The communication unit 11 is not limited as long as it has a function of data communication between the information processing device 10 and the terminal devices 20. For example, the communication unit 11 may include a communication module compatible with a wired or wireless local area network (LAN) standard for connecting to the network NW, or a module compatible with a mobile communication standard such as long term evolution (LTE), fourth generation (4G), or fifth generation (5G). The communication unit 11 may also have a communication module compatible with a short-range communication standard or specification such as Bluetooth (registered trademark), AirDrop (registered trademark), IrDA, ZigBee (registered trademark), Felica (registered trademark), or RFID. The communication unit 11 may include a plurality of communication modules compatible with wired or wireless LAN standards, modules compatible with mobile communication standards, and communication modules compatible with short-distance communication standards or specifications, as a matter of course.

### <Control Unit 30>

The control unit 30 has a function to control the operation of each unit (the communication unit 11, the storage unit 12, the viewing unit 13, the verification unit 15) of the information processing device 10 as described above. The control unit 30 also has a function to display an operation screen (function selection screen) for operating the registration system 1 of the present embodiment. The control unit 30 also has a function to display a screen for operating the selected function (function operation screen) when a user of the registration system 1 selects a function displayed on the function selection screen.

For example, when the registration system 1 of the present embodiment is activated, the control unit 30 displays the function selection screen on a display or the like connected to the information processing device 10, or sends a signal to the terminal device 20 to display the function selection screen. This function selection screen displays, for example, a button indicating the function of each of the above units (view, verify, etc.) and an input field for inputting the function to be selected.

In the following description, the case in which a screen such as the function selection screen is "displayed on a display or the like" and the case in which it is "displayed on the screen of the terminal device 20" may be collectively referred to simply as "displayed on the display or the like".

If the button included in the function selection screen displayed on the display or the like is selected by an input device (e.g., keyboard, mouse, etc.) connected to the information processing device 10 or by touching the screen, or if predetermined information is input into the input field or the like included in the function selection screen displayed on the display or the like by an input device connected to the information processing device 10, the control unit 30 causes the function operation screen for operating the function corresponding to the button or the input information to be displayed on the display or the like. The function operation screen displays, for example, a button indicating the processing to be performed by the selected function or an input field for inputting the processing to be performed.

Regarding the button displayed on the function selection screen or the like, the expression "a button included in the function selection screen displayed on the display or the like is selected by an input device (e.g., keyboard, mouse, etc.) or by touching the screen" may be simply referred to as "select a button" or "select". The expression "predetermined information is input into the input field or the like included in the function selection screen displayed on the display or the like by an input device connected to the information processing device 10" may be simply referred to as "input information". Furthermore, "select a button" and "input information" may be collectively referred to as "input".

The control unit 30 also has a function to cause each unit to perform the selected processing when the user selects the processing or the like included in the function selection screen displayed on the display or the like. For example, when the function selection screen is displayed on the display or the like and the button displayed on the function selection screen is selected or information is input, the control unit 30 causes each unit to perform the processing based on the selected button or the input information.

Furthermore, the control unit 30 may have a function to determine whether to permit the use of the registration system 1 of the present embodiment. For example, when the registration system 1 of the present embodiment is started up, the control unit 30 may have a function to display a screen requesting input of an ID, password, or the like for using the registration system 1 of the present embodiment on the display or the like connected to the information processing device 10, before displaying the function selection screen on the display or the like. When a signal requesting connection is supplied from the terminal device 20 to the information processing device 10 while the registration system 1 of the present embodiment is running, the control unit 30 may have a function to send a signal to the terminal device 20 to display a screen (user authentication screen) requesting input of information identifying the user (hereinafter referred to as user identification information), such as ID and password, for using the registration system 1 of the present embodiment. In this case, the control unit 30 may have a function to display the function selection screen on the display or the like or to send information to display the function selection screen on the screen of the terminal device 20 through the transmission unit 11 if the user identification information input from the input device connected to the information processing device 10 or the terminal device 20 matches information stored in the storage unit 12.

### <Storage Unit 12>

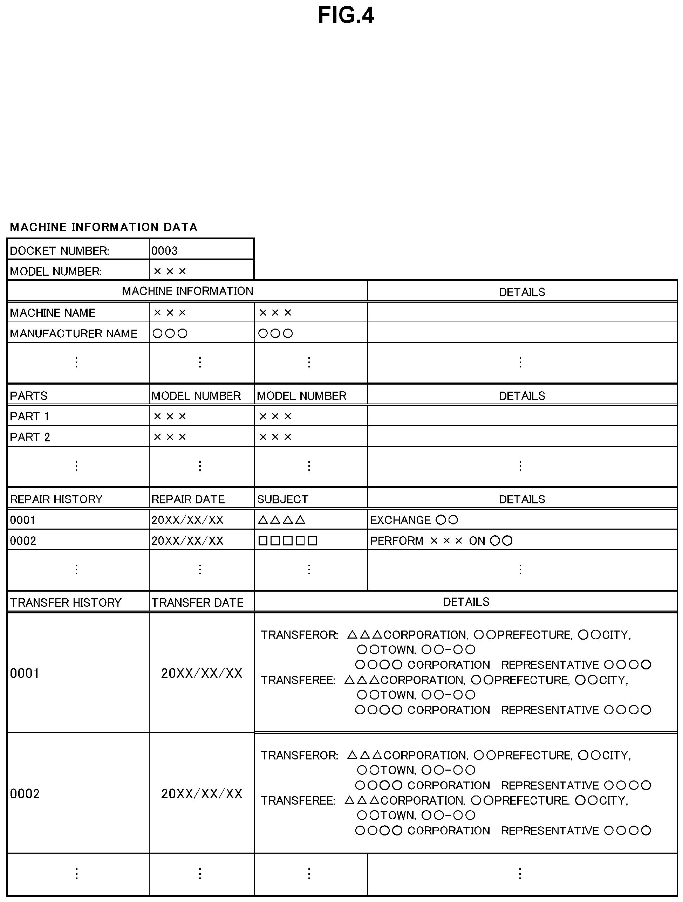

The storage unit 12 has a function to store information necessary for the registration system 1 of the present embodiment to function. The information stored in the storage unit 12 includes the aforementioned user identification information, and the basic information in which machine information data and transfer certificate image data, which is the image data of the transfer certificate for construction machinery (see FIG. 3), are stored in association with each other (see FIG. 4). The machine information data includes machine information, which is various information about a construction machine (e.g., information described in the vehicle inspection certificate of the construction machine, the model number of the construction machine, etc.). The storage unit 12 includes a first storage unit 12a in which the basic information is stored, and a second storage unit 12b that is connected to the first storage unit 12a and stores all or part of the basic information stored in the first storage unit 12a. The storage unit 12 has a function to modify information such as the user identification information and the basic information stored in the first storage unit 12a upon a command from the control unit 30. The storage unit 12 also has a function to supply the information stored in the second storage unit 12b to the viewing unit 13, the verification unit 15, and the like, upon a command from the control unit 30. Details of the storage unit 12 will be described below.

### <Viewing Unit 13>

The viewing unit 13 has a function to provide viewing of the information stored in the second storage unit 12b of the storage unit 12. The viewing unit 13 has an input function 13a, an information request function 13b, and a screen display function 13c. The screen display function 13c has a function to display an input screen for inputting information to be viewed from the input function 13a (input screen display function) and a function to display information supplied based on a request from the information request function 13b (information display function). When a viewing function is selected on the aforementioned function selection screen, the viewing unit 13 performs the input screen display function of the screen display function 13c, the input function 13a, the information request function 13b, and the information display function of the screen display function 13c, in this order, upon a command from the control unit 30. The functions of the viewing unit 13 are described below.

The input screen display function of the screen display function 13c has a function to display the input screen for inputting information to be viewed from the input function 13a on the display or the like, upon a command from the control unit 30. For example, when the viewing function is selected on the function selection screen, the control unit 30 sends a command (input screen display command) to instruct the screen display function 13c to display the input screen on the display or the like. When receiving the input screen display command, the screen display function 13c displays the input screen on the display or the like. The input screen is a screen for the user of the registration system 1 of the present embodiment to input information that the user wishes to view. The input screen may be stored in the screen display function 13c or may be stored in the storage unit 12 so that when sending the input screen display command, the control unit 30 may read the input screen from the storage unit 12 and send the input screen with the input screen display command or may send the input screen incorporated into the input screen display command.

The input function 13a is the function 13a to allow the user of the registration system 1 of the present embodiment to input information that the user wishes to view. The input function 13a has a function to select or input information to be viewed while the input screen is displayed on the display or the like. For example, if the input screen has a button or the like for selecting information, the input function 13a has a function to allow a user US to select the button to input information that the user wishes to view. If a box is displayed on the input screen for the user US to input information that the user wishes to view, such as model number, name of construction machine, or name of owner, the input function 13a has a function to allow the user US to input information in the box to input information that the user wishes to view.

The information request function 13b has a function to request the information stored in the second storage unit 12b of the storage unit 12 based on information input from the input function 13a. For example, when a button (e.g., construction machine name or manufacturer name) related to specific information is selected in the input function 13a, the information request function 13b has a function to supply a viewing request signal to the control unit 30 to request information associated with the information on the button. When the model number of a construction machine is input from the input function 13a, the information request function 13b has a function to supply a viewing request signal to the control unit 30 to request information associated with the model number. Furthermore, when a request for only specific information among the information associated with the model number of the construction machine is input, the information request function 13b has a function to supply a viewing request signal to the control unit 30 to request only the specific information. When the viewing request signal is supplied to the control unit 30 from the information request function 13b, the control unit 30 has a function to read information corresponding to the information included in the viewing request signal (viewing information) from the second storage unit 12b of the storage unit 12 and send the read information to the screen display function 13c.

The information request function 13b may have a function to supply the viewing request signal directly to the second storage unit 12b of the storage unit 12, rather than supplying it to the control unit 30. In this case, the information corresponding to the information included in the viewing request signal (viewing information) may be sent directly from the second storage unit 12b of the storage unit 12 to the screen display function 13c, rather than being sent through the control unit 30.

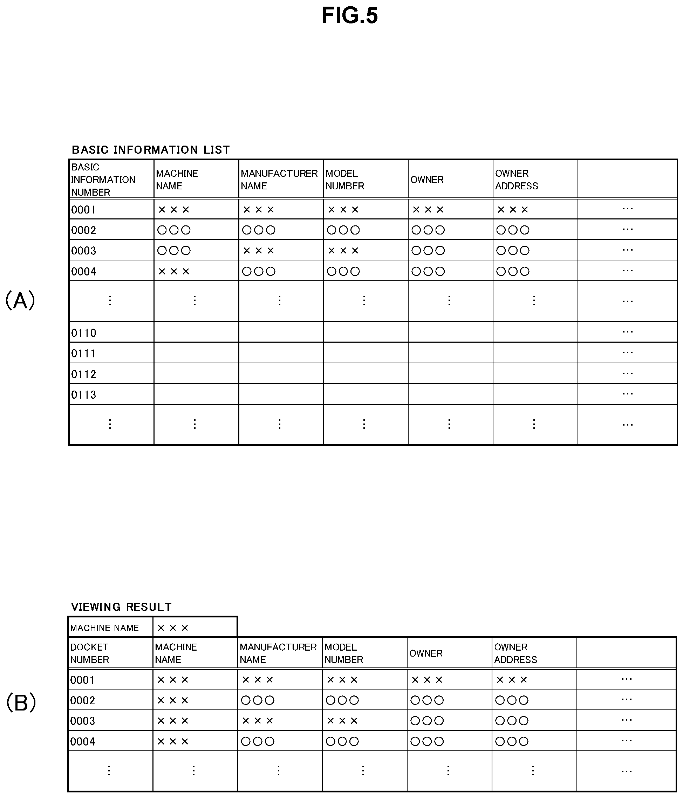

The screen display function 13c has a function to display, as a viewing result, the viewing information sent from the control unit 30 or the second storage unit 12b of the storage unit 12 on the display or the like. For example, if a construction machine name is selected from the input function 13a, the viewing information corresponding to the construction machine name is displayed as a viewing result on the display or the like. If construction machines having the same construction machine name but different model numbers are stored, all construction machines with different model numbers can be displayed as a list on the display or the like (see FIG. 5(B)). When a specific model number is input from the input function 13a, information on each construction machine having the specific model number can be displayed on the display or the like (see FIG. 4).

A screen including the list displayed as the viewing result on the display or the like may function as an input screen. For example, as illustrated in FIG. 5(B), when a plurality of construction machines having the same construction machine name but different model numbers are displayed as a list of the viewing result on the display or the like, a model number in the list may be selected by the input function 13a. Then, the information request function 13b generates a viewing request signal to request information on the construction machine having the selected model number, and the viewing information to display the construction machine having the selected model number is sent to the screen display function 13c, so that information on the construction machine having the selected model number may be displayed on the display or the like. For example, in FIG. 5(B), if the field grayed out is selected, the basic information of the construction machine having the corresponding model number (see FIG. 4) may be displayed as viewing information.

Since the functions of the viewing unit 13 have the functions described above, the user can view the desired information included in the basic information by selecting the viewing function on the function selection screen and performing a predetermined operation or input.

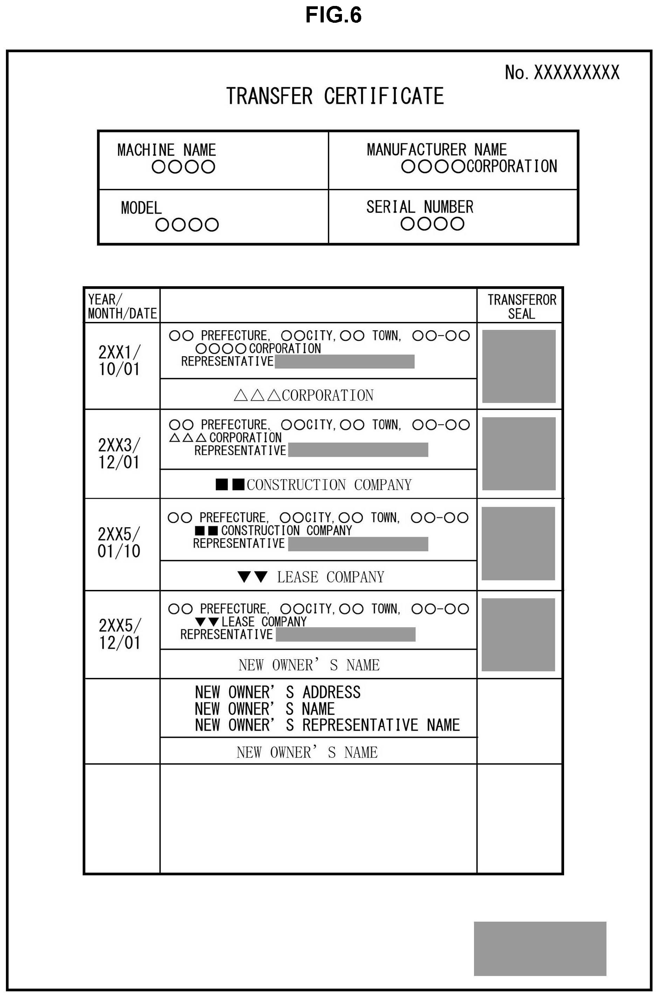

The screen display function 13c of the viewing unit 13 may have a function to hide a part of the viewing information sent from the control unit 30 or the second storage unit 12b of the storage unit 12 if the viewing information, that is, the information requested for viewing by the input function 13a is the transfer certificate image data included in the basic information. For example, if the transfer certificate image data is viewed and a signature or the impression of a seal is displayed on the display or the like, a forged document may be created based on a copy of the displayed image or an image obtained by photographing the screen. Therefore, when a request to view the transfer certificate image data is made, it is desirable that the part of the transfer certificate image that is important for verification by the verification unit 15, such as signature or impression of seal, or hologram, is not displayed (see FIG. 6). For greater security, the transfer certificate image data may be unavailable for viewing.

### <Verification Unit 15>

As illustrated in FIG. 2, the information processing device 10 includes an image acquisition unit 14, which is a device, such as a scanner or a digital camera, having a function to form image data from a document (which hereinafter may be referred to as verification document). The verification unit 15 has a function to determine whether the verification document is the original document of a transfer certificate, that is, whether the verification document is the genuine original document. The verification unit 15 includes a verification image forming function 15a, an image verification function 15b, and a determination function 15c. When a verification function is selected on the aforementioned function selection screen, the verification unit 15 performs the verification image forming function 15a, the image verification function 15b, and the determination function 15c in this order upon a command from the control unit 30. The function of the determination function 15c is described below. The "transfer certificate image" is equivalent to "original certificate image" recited in the claims.

The verification image forming function 15a has a function to form verification image data by activating the image acquisition unit 14 upon a command from the control unit 30. For example, when the verification function is selected on the function selection screen, the control unit 30 sends a command (image acquisition command) to instruct the verification image forming function 15a to activate the image acquisition unit 14 to form verification image data. Upon receiving the image acquisition command, the verification image forming function 15a displays a screen for acquiring a verification image (image acquisition screen) on the display or the like. The image acquisition screen includes a command to place the verification document at a predetermined position of the image acquisition unit 14 (i.e., a position where an image of the written document can be acquired), a button to execute image acquisition, a box for inputting information identifying the verification document (transfer certificate number, model number (serial number) of construction machine, etc.), and the like. Then, after setting the verification document at the predetermined position of the image acquisition unit 14, the user selects the button to execute image acquisition, so that verification image data of the verification document is formed by the image acquisition unit 14. The formed verification image data is supplied from the image acquisition unit 14 to the verification image forming function 15a (or the control unit 30) and supplied together with information identifying the verification document from the verification image forming function 15a (or the control unit 30) to the image verification function 15b. Since the verification document usually contains the information identifying the verification document, the box for inputting information identifying the verification document may be omitted, and the verification image forming function 15a or the image verification function 15b may acquire the information identifying the verification document.

The image verification function 15b has a function to compare the transfer certificate image data included in the basic information with the verification image data and verify whether they match. For example, when the verification image data is supplied from the verification image forming function 15a (or the control unit 30) to the image verification function 15b, the image verification function 15b obtains the basic information having the information identifying the verification document from the second storage unit 12a of the storage unit 12, based on the information identifying the verification document sent together with the verification image data (or the information identifying the verification document acquired from the verification image data). Once the basic information is obtained, the transfer certificate image data is selected from the basic information, and the transfer certificate image data is compared with the verification image data. In other words, the image of the verification image data and the image of the transfer certificate image data are compared by a known method such as pattern matching to verify the matching state of the two images and produce the verification result. The verification result calculated by the image verification function 15b is not particularly limited. For example, the image verification function 15b can produce the verification result in the form of a score or a match ratio (percentage) to express the degree of match between the transfer certificate image data and the verification image data. The calculated verification result is supplied from the image verification function 15b to the determination function 15c, together with the verification image data and the information identifying the verification document.

It is desirable that the image verification function 15b has a function to display an error message or to display a message to prompt for registration of new basic information if the basic information corresponding to the information identifying the verification document does not exist, or if the basic information corresponding to the information identifying the verification document does not include the transfer certificate image data.

The determination function 15c is a function to determine whether the document that is the source of the verification image data is an original written document that is the source of the image of the transfer certificate image data, based on the result of comparison and verification by the image verification function 15b. For example, when the verification result is sent from the image verification function 15b, the determination function 15c determines whether the document is a legitimate original written document from the verification result, based on a predetermined threshold or the like, and displays the determination result on the display or the like. The method by which the determination function 15c determines whether the document is a legitimate transfer certificate is not particularly limited. For example, if the image verification function 15b outputs the verification result as a score, whether the document is a legitimate transfer certificate may be determined based on whether the score is equal to or higher than a threshold. In other words, if the score is equal to or higher than the threshold, the verification document is determined to be a legitimate transfer certificate, and if the score is lower than the threshold, the verification document may be determined to be illegitimate. Similarly, if the image verification function 15b evaluates the verification result as a percentage, whether the document is a legitimate transfer certificate may be determined based on whether the percentage is equal to or higher than a threshold.

Even if the verification document is a legitimate transfer certificate, the verification document may be difficult to verify, for example, due to damage over extended periods of use. Therefore, the determination function 15c may not only determine, as a determination result, that the document is a legitimate transfer certificate or that the transfer certificate is a fake, but also determine, as a determination result, that the document is likely to be a legitimate transfer certificate or is unlikely to be a legitimate transfer certificate.

Since the verification unit 15 has the functions described above, the authenticity of the verification document can be accurately determined.

For example, in the case of a transfer certificate for construction machinery, the transfer certificate is signed (or stamped) with the name and address of the purchaser (transferor) who purchased a construction machine from a construction machinery manufacturer, and the seal authenticating the transferor, such as the transferor's registered personal seal (or registered seal (representative seal) if the transferor is a corporation), is stamped in a line below the signature of the construction machinery manufacturer (see FIG. 3). It is difficult to match the letters of the signature and the impression of the seal exactly on the original transfer certificate and on a forged document of the original. In addition, each time the construction machine is transferred, new transferor's signature and seal are added, which increases the number of letters of signatures and the number of impressions of seals, making it even more difficult to forge the original. Therefore, the image verification function 15b verifies whether a matching image is included by comparing and verifying the image data of the transfer certificate (verification image data) acquired by the verification image forming function 15a through the image acquisition unit 14 with the image data of the original transfer certificate (transfer certificate image data) included in the basic information, and the determination function 15c determines the degree of match, whereby the authenticity of the written transfer certificate can be accurately determined.

The image verification function 15b may compare the entire verification image with the transfer certificate image to determine whether they match, or may determine whether the image of the part important and characteristic in determining the transfer certificate (certification information image) is matched between the transfer certificate image and the verification image. For example, in the case of the transfer certificate for construction machinery as illustrated in FIG. 3, when the image including the transfer certificate number, the model, the serial number, and the section signed and stamped by the construction machinery manufacturer and the transferee is used as the certification information image, the verification time can be reduced compared to when the entirety is compared, and the image area to be compared can be limited. This can enhance the accuracy of verification. The certification information image may be predetermined, or the certification information image may be determined by the user through the verification image forming function 15a. When the certification information image is predetermined, the certification information image may be stored in the transfer certificate image data in the basic information along with the entire image data. When the certification information image is determined by the user through the verification image forming function 15a, the image verification function 15b has a function to search for a part corresponding to the certification information image in the transfer certificate image. For example, if a written document to be certified is the transfer certificate of a construction machine, the certification information image may include the transfer certificate number, the model, the serial number, the section signed or stamped by the manufacturer or transferor, and the hologram of the transfer certificate.

A plurality of the certification information images may be provided, and the image verification function 15b may produce a comparison verification result for each of the certification information images. For example, the transfer certificate number, model, serial number, signed section, stamped section, and hologram are set as separate certification information images, so that each certification information image is verified separately, and a verification result is produced for each. Then, only if all the verification results are above a predetermined degree of match, the verification written document may be determined to be the original written document of the transfer certificate. When a plurality of the certification information images are set, it is desirable that the relative position of each certification information image is subject to verification.

Although a common method such as pattern matching or template matching as described above may be used as a method of comparing and verifying the image of the verification image data with the image of the transfer certificate image data, artificial intelligence (AI) may be used to compare and verify the two images. In particular, when a signature or a seal impression is used as the certification information image, the degree of match between the two images can be accurately verified by using artificial intelligence (AI) for comparison and verification. For example, when an original written document is compared with a verification written document, artificial intelligence (AI) may be used for comparison and verification to recognize slight misalignments in the position of the impression or signature, as well as smudges and shading differences in the impression or signature, thereby increasing the accuracy of determining forged documents. In addition, handwriting analysis can be performed by learning the handwriting of a signer. This also makes it possible to verify the identity of the signer of the original written document. For example, if someone else signs the original and creates a transfer certificate without permission, the verification written document will be the original written document itself. However, the handwriting analysis makes it possible to detect that the transfer is forgery even though the verification written document itself is the original written document. Then, it is possible to determine whether the transfer agreement is legitimate, for example, even in a case where the original written document is stolen.

### <Operation of Registration System 1 of the Present Embodiment>

The registration system 1 of the present embodiment has the configuration as described above to function as follows.

First, when the registration system 1 of the present embodiment (hereinafter simply referred to as "registration system 1") is connected from the terminal device 20 while the registration system 1 is running, the control unit 30 displays the user authentication screen. Once the user identification information is input on the user authentication screen, the registration system 1 becomes available, and the control unit 30 displays the function selection screen. Once a function to be used is selected on the function selection screen, the control unit 30 or each unit displays the function operation screen for each function. Then each function becomes available.

For example, when the viewing function is selected, the screen display function 13c of the viewing function displays the input screen on the display or the like to enable the user to select and input information on a construction machine to be viewed on the input screen. When predetermined information and the like is input, the information request function 13b requests the information on the construction machine to be viewed from the second storage unit 12b of the storage unit 12. Then, in response to the request, the information on the construction machine to be viewed is sent from the second storage unit 12b of the storage unit 12 to the screen display function 13c. The screen display function 13c then displays a list of the information on the construction machine to be viewed on the display or the like to enable the user to view the desired information.

For example, if the user selects information displayed on the display or the like, the selected information is further displayed on the display or the like through the same processing as described above, enabling the user to view the details of the selected information.

When the verification function is selected, the processing of forming image data of a verification document such as a transfer certificate is initiated. In other words, the verification image forming function 15a forms verification image data by scanning or photographing a document such as a transfer certificate using the image acquisition unit 14. Information identifying the verification document is also input from the verification image forming function 15a. Once the verification image data is formed, the verification image data and the information identifying the verification document are sent to the image verification function 15b, and the image verification function 15b acquires the corresponding basic information from the second storage unit 12b of the storage unit 12 based on the information identifying the verification document. Upon acquiring the basic information, the image verification function 15b compares and verifies the verification document with the transfer certificate image data included in the basic information and produces a verification result. Once the verification result is produced, the verification result is sent from the image verification function 15b to the determination function 15c, and the determination function 15c determines whether the verification document is a legitimate original written document based on the verification result, and displays the determination result on the display or the like. Therefore, by using the verification function, the user can determine whether a written document such as a transfer certificate is an original written document or a forged document. In the registration system 1 of the present embodiment, the verification unit 15 compares the data formed from the verification written document with the data of the original written document of the transfer certificate stored in the storage unit 12 to determine authenticity, thereby preventing forgery while using the existing method based on written documents. Thus, even for construction machinery currently in circulation, the existence of rights can be clarified and counterfeiting of ownership can be prevented.

### <Storage Unit 12>

The storage unit 12 includes the first storage unit 12a and the second storage unit 12a connected to the first storage unit 12a as described above.

The first storage unit 12a stores the basic information, which is data in which various kinds of information about construction machinery are associated with each other. The basic information is information in which the machine information data (see FIG. 4) including machine information, which is various kinds information about construction machinery, and the transfer certificate image data, which is image data of the transfer certificate for construction machinery, are stored in association with each other (see FIG. 5(A)). The basic information is provided for each machine, and the basic information of a plurality of machines is stored in the first storage unit 12a as a basic information list.

The second storage unit 12b stores information provided by the first storage unit 12a. The second storage unit 12b is provided with information from the first storage unit 12a but is not permitted to request information from the first storage unit 12a or to request a change or addition to the stored information. In other words, information is supplied in a unidirectional manner from the first storage unit 12a to the second storage unit 12b, and the second storage unit 12b has a function to change information to new information if the supplied information is already stored and to additionally store information if the supplied information is newly supplied information. The second storage unit 12b can provide the stored information upon a request from each unit, while change of the stored information in response to an operation or the like from each unit is not permitted or is restricted.

In this way, the storage unit 12 includes the second storage unit 12b that provides the stored information for viewing or verification upon a request from each unit, while change of the information is not permitted or is restricted. The information is basically supplied in a unidirectional manner from the first storage unit 12a to the second storage unit 12b. Because of this configuration, the registration system 1 of the present embodiment has a system configuration that makes it difficult to tamper with information such as the basic information stored in the first storage unit 12a of the storage unit 12, thus ensuring the security of the basic information and increasing reliability.

In particular, when the first storage unit 12a of the storage unit 12 is a node in a private blockchain, the basic information is distributed and shared by all nodes. This makes it even more difficult to tamper with the basic information, thus further increasing the security and reliability of the basic information.

The storage unit 12 does not necessarily have the second storage unit 12b although the security and reliability of the basic information can be increased if the storage unit 12 has the first storage unit 12a and the second storage unit 12b as described above. Even in this case, security and reliability can be maintained as long as the first storage unit 12a provides information upon a request from each unit, while change or addition to the basic information and the like upon a request from each unit is not permitted or is restricted. Also in this case, when the first storage unit 12a is a node of a private blockchain, security and reliability can be increased.

The machine information included in the basic information is not particularly limited, and the basic information may include various kinds of information as machine information. Examples of the machine information may include information on the vehicle inspection certificate of a construction machine, the model number of the construction machine, the name and address of the manufacturer, and the names and addresses of the current and past owners. The machine information may also include the repair history of the construction machine, the numbers of various parts that constitute the construction machine and their replacement history. For example, as illustrated in FIG. 4, the data of the machine information can be data in which the model number of each construction machine is associated with the machine information as a list.

If not only the latest image data of the transfer certificate but also the past image data of the transfer certificate is kept as history, the verification of whether the verification document is an original document can be performed more accurately. In other words, if the verification unit 15 compares the current verification image with all past transfer certificate images, the authenticity of the verified verification document can be verified more accurately.

The verification image acquired by the image acquisition unit 14 may also be included in the basic information in the first storage unit 12a of the storage unit 12 in association with the transfer certificate image. For example, the verification unit 15 or the control unit 30 may have: a function to create verification execution data in which the verification image, information on the transfer certificate image (e.g., model number of construction machine) compared and verified with the verification image, the date and time when the verification was executed, and information on the user who executed the verification are associated with each other; and a function to send the verification execution data to the first storage unit 12a of the storage unit 12 after the verification is completed. In addition, the first storage unit 12a of the storage unit 12 may have a function to add the verification execution data to the basic information corresponding to the information of the transfer certificate image included in the verification execution data when the verification execution data is sent from the verification unit 15 or the control unit 30. With such functions, it is possible to ascertain, for example, who tried to verify the transfer certificate for construction machinery and when. If the written document that is the source of the verification image is a forged document, the creation of the forged document and its holder can be quickly ascertained. This can quickly prevent damage due to forgery and increase the effectiveness of deterring forgery. As described above, the information supplied from the verification unit 15 or the control unit 30 is not added to the basic information in the first storage unit 12a of the storage unit 12 immediately when the information is supplied. Rather, it is desirable that the information is once stored in a temporary holder or the like in the first storage unit 12a of the storage unit 12, and an administrator AD determines whether to add or change the supplied information using an information change unit 16 described below.

The basic information may also include information on the current location of construction machinery and information on the valuation of construction machinery.

If the basic information includes information on the current location of construction machinery, procurement of construction machinery can be facilitated and ensured. For example, a contractor who wants to use a construction machine with predetermined performance at a certain location uses the viewing function of the registration system 1 of the present embodiment to input and view the construction machine having the desired performance and the location where they want to use the machine. Then, the contractor may find the construction machine close to the location to use and having predetermined performance. This enables efficient procurement of construction machinery. In addition, since the basic information also includes information such as past owners and repair history, it is also possible to foresee problems with the construction machine to be procured.

If the basic information includes information on the valuation of the construction machine, whether the price and asset value of the construction machine to be purchased are appropriate can be ascertained easily and reliably. For example, if the purchase of a certain construction machine is being negotiated, the viewing function of the registration system 1 of the present embodiment is used to input and view the functions, model, and years of use equivalent to those of the construction machine. Then, it is possible to quickly and easily determine whether the price mentioned by the transferor is appropriate for the construction machine to be purchased. In addition, since the asset value of the construction machine to be purchased can be ascertained, the information viewed may be provided to facilitate financing from a financial institution such as a leasing company or a bank. This can also reduce the risk in financing for the financial institution.

In particular, when the valuation of the construction machine is viewed, initially, the valuation stored in the basic information is displayed. Then, once the viewing starts, the price (current price) of the same model of construction machines in the used market that are automatically searched for or retrieved by AI via the Internet may be displayed. The viewer will then be able to grasp the current price in a timely manner, enabling the viewer to make a purchase plan, sign a purchase agreement, or finance a purchase at a reasonable price.

During viewing, the current price may be displayed from the beginning instead of the valuation stored in the basic information.

When the viewing ends, the viewing unit 15 may have a function to send a command (valuation change command) to the control unit 30 to request change of the valuation stored in the basic information . In this case, when receiving the valuation change command, the control unit 30 may have a function to change the valuation stored in the basic information automatically or after receiving approval from the administrator AD.

### <Information Change Unit 16>

The registration system 1 of the present embodiment includes the information change unit 16 having a function to directly make a change or addition to the basic information stored in the first storage unit 12a of the storage unit 12. As described above, the storage unit 12 allows each function to acquire information stored in the second storage unit 12b, and the second storage unit 12b stores information such as the basic information provided by the first storage unit 12a. However, the second storage unit 12b provides the stored information for viewing and verification, while change of the information is not permitted or is restricted. With such a configuration, the registration system 1 of the present embodiment has a system configuration that makes it difficult to tamper with the basic information and the like. However, when a new transferor is added to the transfer certificate, the transfer certificate image included in the basic information needs to be updated. In addition, there is a case in which the basic information of a new construction machine is to be added. Therefore, the registration system 1 of the present embodiment has the information change unit 16 that can be operated only by a limited administrator AD and the like to enable change or addition to the basic information stored in the first storage unit 12a of the storage unit 12 without restriction, while preventing a problem such as tampering with the basic information.

### <Digital Transfer Certificate Creation and Management Function>

The registration system 1 of the present embodiment is based on the existing system that certifies transfers, for example, in the case of construction machinery, the system that proves and verifies the owner and change of ownership using a written transfer certificate. The registration system 1 of the present embodiment may have a function to create a digital transfer certificate associated with the basic information and manage ownership by means of the digital transfer certificate. In other words, in addition to the management of ownership by means of a written transfer certificate, the management of ownership by means of a digital transfer certificate may be implemented.

For example, when a construction machinery manufacturer produces a new construction machine, the information change unit 16 may have a function to, with input of information such as the manufacturer's name and address and the model number of the subject construction machine, create new basic information corresponding to the model number of the construction machine and add the basic information (new basic information) registered in the first storage unit 12a of the storage unit 12 to the basic information list. Once the new basic information is added to the basic information list, the information change unit 16 has a function to create digital transfer certificate data associated with the new basic information. Then, once the digital transfer certificate data is created, the information change unit 16 has a function to add information such as the purchaser's name and address to the digital transfer certificate data. When the construction machine registered on the digital transfer certificate is transferred, the information change unit 16 has a function to add the transferee to the digital transfer certificate. With such a configuration, it is possible to reliably ascertain who the owner is and the transfer of ownership, even for a new construction machine. Therefore, the registration system 1 of the present embodiment can manage ownership by means of a digital transfer certificate.

Also in this case, when the first storage unit 12a of the storage unit 12 that stores the basic information is a node of a private blockchain, it is difficult to tamper with even a digital transfer certificate, which is digital data reproduced and modified more accurately and easily than a written document. Therefore, the security and reliability can be increased even when ownership is managed by means of digital transfer certificates.

The information change unit 16 may have a function to search for and display whether the transferor or transferee of the digital transfer certificate is registered as a transferor or transferee on the basic information list of other construction machines, and if registered, their transaction history. With such a function, the transaction history can be provided to the transferor or transferee to prompt the transferor or transferee to consider the transfer agreement, thereby enhancing the security of the transaction. For example, if it can be confirmed that the transferor or transferee is the transferor or transferee of the transaction of a construction machine registered on a written transfer certificate, the transferor or transferee can be determined as a safe and reliable business partner. In other words, when the registration system 1 of the present embodiment that manages ownership by means of a written document is configured to manage ownership by means of a digital certificate, the security of the management of ownership and transfer transactions can be enhanced.

In the case of the transferor or transferee who is not found in the past transaction history, the information change unit 16 may have a function to verify the transferor or transferee. For example, a list of companies with criminal records or accidents in other transactions (list of risky traders) is registered in the first storage unit 12a of storage unit 12, and the information change unit 16 has a function to search the list for the transferor or transferee not found in the past transaction history. This can reduce the possibility that the transferor or transferee would be involved in a risky transaction.

When the viewing unit 13 has a function to search the transaction history by inputting a company name or the like, the information change unit 16 does not necessarily have a function to search and display the transaction history.

When the data of the digital transfer certificate is a "non-fungible token (NFT)", the reliability of the digital transfer certificate can be further enhanced.

### <Digital Cancellation Certificate Creation and Management Function>

The registration system 1 of the present embodiment may have a function to cancel the registration of ownership and certify that the registration has been canceled. In other words, the registration system 1 may have a function to create and issue a digital cancellation certificate certifying that the registration has been canceled. For example, when exporting construction machinery overseas, it is necessary to cancel the registration in Japan, and exporting overseas is possible on the premise that the registration is canceled. Therefore, for example, if a construction machine to be exported overseas is registered in the registration system 1 of the present embodiment, the information change unit 16 may have a function to input information for canceling the registration and add the cancellation information to the basic information. For example, a function to add the user who registered the cancellation, the date of the cancellation registration, the reason for the cancellation, and the like to the basic information as the cancellation information may be provided. Then, by viewing the basic information, it is possible to prevent the trouble of negotiating transfer or signing a purchase contract for a construction machine that no longer exists in Japan, thereby enhancing transaction security.

When the cancellation information is registered, the information change unit 16 may have a function to create a digital cancellation certificate certifying that the registration has been canceled, so that the registration cancellation can be confirmed easily and quickly by means of the digital cancellation certificate. This can expedite overseas exports and the like while increasing transaction security.

It is desirable that even if the cancellation information is registered for a certain construction machine, the cancellation information is only additionally stored in the basic information of the construction machine, and the basic information of the construction machine is kept stored as it is in the basic information list. Then, even after the cancellation information has been registered, the past information of the construction machine can be tracked. In addition, even once the cancellation information has been registered, the registration can be easily restored, and the continuity of information from before the cancellation to after the re-registration can be maintained.

### Industrial Applicability

The registration system of the present embodiment is suitable as a system that manages registration of ownership and the like of not only construction machinery but also various movable property that is issued written registrations, certificates, and the like.

### Reference Signs List

1 registration system
10 information processing device
12 storage unit
12a first storage unit
12b second storage unit
13 viewing unit
13a input function
13b information request function
13c screen display function
14 viewing unit
15 verification unit
15a verification image forming function
15b image verification function
15c determination function
20 terminal device
30 control unit

## Claims

1. A registration system that manages rights in an article, the rights being certified by a written document, the registration system comprising:
a storage unit configured to store information about the article and an original certificate image in association with each other, the original certificate image being an image of an original written document certifying the rights to the article; and
a verification unit configured to compare a verification image of a written document captured as an image with the original certificate image stored in the storage unit, wherein
the verification unit includes
an image verification function to compare a certification information image included in the original certificate image with the verification image and verify whether the verification image includes an image that matches the certification information image in the original certificate image, and
a determination function to determine whether the written document to be verified is an original of the written document certifying the rights to the article, based on a result of comparison and verification by the image verification function.

2. The registration system according to claim 1, wherein the certification information image is a letter of a signature by an owner and/or a transferee of the rights to the article, and/or an impression of a seal of an owner and/or a transferee of the rights to the article.

3. The registration system according to claim 1 or 2, wherein
the article is construction machinery, and
the written document is a transfer certificate of the construction machinery.

4. The registration system according to claim 1, further comprising a viewing unit configured to provide viewing of the information about the article that is stored in the storage unit, wherein
the viewing unit includes
an input function to input information to be viewed,
an information request function to request information from the storage unit for the information input by the input function, and
a screen display function having a function to display an input screen for inputting information to be viewed from the input function and/or a function to display information supplied based on a request from the information request function.

5. The registration system according to claim 4, wherein
the storage unit includes
a first storage unit configured to store basic information in which the information about the article and the original certificate image are associated with each other, and
a second storage unit connected to the first storage unit, the second storage unit storing all and/or part of the basic information in the first storage unit, and
the storage unit has a function to provide information stored in the second storage unit in response to a request from the information request function of the viewing unit.

6. The registration system according to claim 5, wherein
the first storage unit of the storage unit is a node of a private blockchain, and
the basic information is registered in the blockchain.

7. The registration system according to claim 4, wherein the viewing unit has a function to hide a part of the original certificate image when information to be viewed is the original certificate image.

8. The registration system according to claim 1, wherein the information about the article includes information about a location of the article and/or information about a valuation of the article.

9. The registration system according to claim 1, wherein the image verification function of the verification unit compares and verifies the verification image with the certification information image in the original certificate image using artificial intelligence (AI).

10. The registration system according to claim 1, further comprising an information change unit having:
a function to create information about a new article and store the created information in the storage unit; and
a function to create a digital transfer certificate associated with the information about the new article, the digital transfer certificate including information about rights to the new article and an owner of the rights,
wherein the digital transfer certificate stores history of the owner of the rights to the new article.

11. The registration system according to claim 1, further comprising an information change unit having:
a function to cancel registration of an article registered and store information in the storage unit; and
a function to create a digital cancellation certificate associated with information about the new article, the digital cancellation certificate certifying cancellation of registration of the article having the registration canceled.
